## Europäisches Patentamt
## European Patent Office
## Office européen des brevets

(19)

(11) Numéro de publication: **0 134 174**
**B1**

(12) **FASCICULE DE BREVET EUROPÉEN**

(45) Date de publication du fascicule du brevet:
24.02.88

(51) Int. Cl.⁴: **H 04 Q 9/14,** G 08 C 19/16

(21) Numéro de dépôt: **84401632.9**

(22) Date de dépôt: **03.08.84**

(54) **Procédé de transmission de messages entre un poste central et plusieurs postes éloignés.**

(30) Priorité: **19.08.83 FR 8313503**

(43) Date de publication de la demande:
**13.03.85 Bulletin 85/11**

(45) Mention de la délivrance du brevet:
**24.02.88 Bulletin 88/8**

(84) Etats contractants désignés:
**AT BE CH DE GB IT LI LU NL SE**

(56) Documents cité:
**DE-A-2 521 388**
**DE-B-2 244 677**
**DE-C-3 211 020**
**FR-A-2 254 164**
**FR-A-2 377 611**
**US-A-3 835 252**

(73) Titulaire: **LA DETECTION ELECTRONIQUE FRANCAISE PROTECBAT Société dite:, 20 Rue de la République, F-92170 Vanves (FR)**

(72) Inventeur: **Duval, Claude, 18 Rue de Sèvres, F-92100 Boulogne (FR)**

(74) Mandataire: **Moncheny, Michel, c/o Cabinet Lavoix 2 Place d'Estienne d'Orves, F-75441 Paris Cedex 09 (FR)**

EP 0 134 174 B1

LIBER, STOCKHOLM 1988

## Description

La présente invention concerne la transmission par liaison bifilaire entre un poste de commande at de surveillance et plusieurs postes éloignés, de messages rendant compte d'une situation à l'endroit de chaque poste éloigné. Un procédé et un dispositif permettant une telle transmission peuvent être mis en oeuvre notamment, mais non exclusivement, pour la surveillance de locaux en matière de sécurite.

A l'heure actuelle, l'exploitation d'un immeuble important, d'une usine ou d'un groupe d'usines devient complexe. La coût de la main d'oeuvre étant important, il devient indispensable de regrouper dans un poste central de surveillance unique et sous une forme simple, toutes les informations et les possibilités de commande relatives à la sécurité.

Pour la transmission de messages entre le poste central de surveillence et les divers postes éloignés, on sait utiliser déjà des liaisons permettent de véhiculer les signeux utiles et de surveillence de ligne. Par exemple, une méthode connue à l'heure actuelle est d'utiliser une boucle normalisée de courent de 20 mA. Le dialogue entre le poste central et les postes éloignés demande alors un câble à quatre fils et des équipements convenables montés aux extrémités du câble, mais ce dispositif ne peut se suffire à lui-même. Il faut en plus passer une ligne d'énergie destinée à alimenter les équipements d'extrémité. Le nombre de fils devient alors six et le branchement des élémente du dispositif représente sur le chantier du bâtiment à équiper une difficulté et un coût importants.

On connaît d'après le document DE-2 521 388, un dispositif de transmission de messages par une ligne omnibus entre un poste central de commande et de surveillance et plusieurs postes de détection éloignés. Ces postes éloignés sont destinés à engendrer un signal représentatif d'au moins un paramètre de leur environnement. Ce dispositif met en oeuvre un procédé au cours duquel le poste central engendre successivement des adresses affectées chacune à l'un des postes éloignés, qui, en réponse à la réception de cette adresse émettent un message caractéristique de la valeur du paramètre d'environnement correspondant.

On connaît également, d'après le document PCT-WO 81/02 962 un dispositif de ce type dans lequel le poste central comporte des moyens destinés à engendrer des signaux de commande qui sont appliqués à la liaison bifilaire de manière à activer les postes éloignée. Ces signaux de commande comportent une série d'impulsions constituées par une impulsion d'initialisation et plusieurs autres impulsions. Les postes éloignés sont adressés à la réception d'un nombre prédéterminé d'impulsions.

Par ailleurs, la transmission des informations entre les postes éloignés et le poste central est réalisée par modulation à plusieurs niveaux de l'intensité circulant dans la ligne.

Cependant, ces dispositifs présentent un certain nombre d'inconvénients, notamment au niveau de le fiabilité de transmission des informations, en raison des parasites que l'on rencontre dans de telles applications, la structure de ces dispositifs étant telle qu'ile sont très sensibles à ce type de perturbations.

L'invention à pour but de fournir un procédé et un dispositif permettant de remédier à ces inconvénients et de réduire considérablement les difficultés d'implantation d'une installation de sécurité dans un bâtiment.

L'invention à donc pour objet un procédé de transmission de messages par une liaison bifilaire entre un poste central de commande et de surveillance et plusieurs postes de détection éloignés destinés à engendrer un signal représentatif d'au moins un paramètre de leur environnement, notamment pour la surveillance de locaux, au cours duquel le poste central engendre successivement des adresses affectées chacune à l'un des postes éloignés, ceux-ci en réponse à la réception de cette adresse émettant un message caractéristique de la valeur du paramètre d'environnement correspondant, caractérisé en ce que lesdites adresses sont engendrées dans le poste central par modulation d'un signal d'horloge ajouté à une tension continue appliquée en permanence à ladite liaison bifilaire, cette tension continue constituant également la tension d'alimentation des postes éloignés, et en ce que chaque poste éloigné transmet son message au poste central, par modulation entre deux niveaux au rythme du signal d'horloge, de l'amplitude du courant circulant dans ladite liaison, par application à celle-ci de ladite tension en modifiant l'impédance de ladite ligne.

Grâce à ces caractérietiques, on peut utiliser une simple liaison par un câble blindé à deux conducteurs du type utilisé habituellement par l'Administration des Télécommunications pour établir les liaisons téléphoniques, ce câble pouvant transmettre à la fois les signaux de dialogue entre les postes et l'énergie d'alimentation des postes éloignés qui peuvent ainsi être dépourvus d'une alimentation autonome.

L'invention à également pour objet un dispositif pour la mise en oeuvre du procédé tel que défini ci-dessus.

D'autres caractéristiques et avantages de l'invention apparaîtront au cours de la description qui va suivre, donnée uniquement à titre d'exemple et faite en référence aux dessins annexés, sur lesquels:
- la Fig. 1 est un schéma très simplifié d'une installation de surveillance suivant l'invention;
- la Fig. 2 représente une forme d'onde de tension circulant sur la liaison bifilaire du poste central vers les postes éloignés pour permettre l'adressage de ceux-ci;
- la Fig. 3 représente une forme d'onde de courant circulant sur la liaison filaire des postes éloignés vers le poste central pour la transmission des messages;

- la Fig. 4 représente un schéma simplifié du poste central de commande et de surveillance;

- la Fig. 5 est un schéma simplifié d'un poste éloigné;

Fig. 6 illustre par plusieurs formes d'ondes le fonctionnement de l'installation suivant l'invention;

- la Fig. 7 montre un autre agencement d'une installation suivant l'invention.

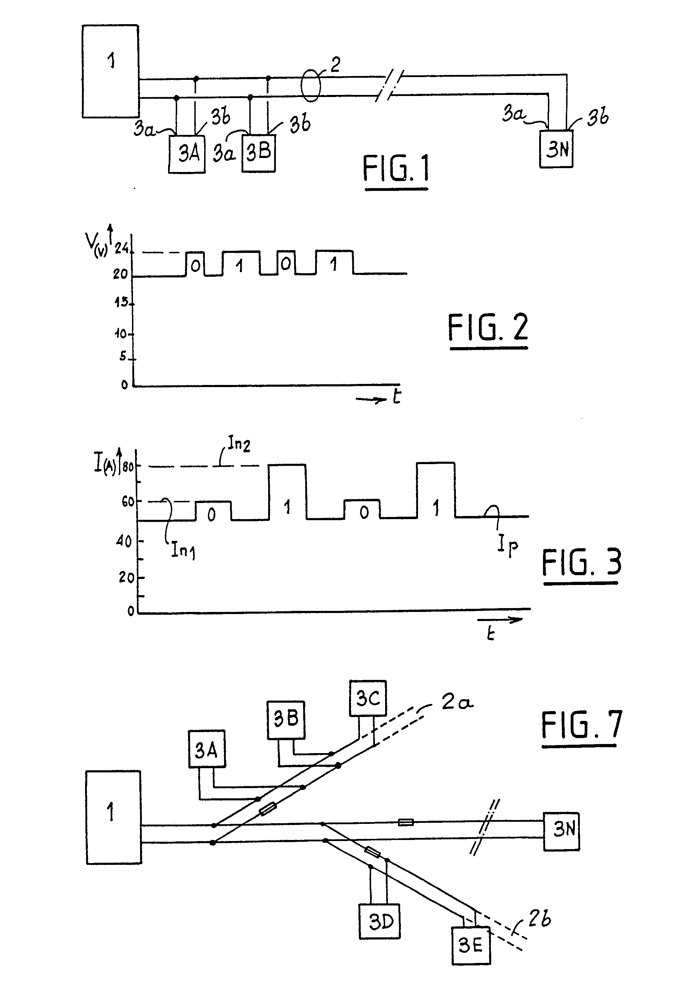

La Fig. 1 représente très schématiquement une installation de surveillance suivant la invention. Un poste 1 de commande et de surveillance placé à un endroit stratégique d'un ensemble dont la sécurité doit être assurée (immeuble, usine, navire, etc), est à une ligne de transmission 2 formée par un simple câble bifilaire blindé du type utilisé par l'Administration des P.T.T. pour les liaisons locaux téléphoniques. Des postes éloignés 3A à 3N placés en des endroits de l'ensemble à surveiller, sont respectivement connectés à la ligne de transmission 2 par deux bornes 3a, 3b.

Les Fig. 2 et 3 montrent la forme caractéristique des signaux circulant sur la ligne de transmission lors des échanges d'information entre le poste de commande et de surveillance 1 et les postes 3A à 3N.

Dans le sens poste de commande-postes éloignés, la ligne de transmission 2 est soumise à une tension continue qui peut varier entre deux niveaux (20 et 24 volts, par exemple), cette tension étant modulée pour la transmission de signaux binaires 0 et 1 qui constituent des adresses caractérisant les postes éloignés 3A à 3N.

Dans l'exemple décrit ici, la tension continue appliquée à la ligne 2 est modulée en largeur d'impulsions, l'adresse représentée à titre d'exemple à la Fig. 2 étant 0101. Bien entendu, d'autres types de modulation sont possibles sans sortir du cadre de l'invention.

En sens inverse, c'est à dire lorsqu'un message doit être transmis d'un poste éloigné vers le poste de commande et de surveillance, un courant circule dans ligne 2, ce courant présentant un niveau permanent $I_P$ de 50 milli-ampères par exemple, auquel est superposée une modulation d'amplitude variant entre deux niveaux $I_{n1}$ et $I_{n2}$. Le niveau inférieur qui peut être fixé à 60 milli-ampères par exemple, peut représenter un bit 0 tandis que le niveau supérieur fixé par exemple à 80 milli-ampères peut représenter les bits 1.

Sur la Fig. 3, on a représenté à titre d'exemple la transmission d'un signal binaire 0101.

Le courant ainsi modulé résulte d'une tension qui est appliqué sur la ligne 2 pendant le transfert du message à partir d'un poste éloigné 3A à 3N adressé à l'instant considéré, le circuit dans le poste éloigné étant capable, suivant l'état des paramètres détectés par ce poste sur place, d'engendrer les variations d'amplitude telle, que celles représentées à la Fig. 3. Ainsi, les postes éloignés n'ont besoin d'aucune alimentation autonome et ne chargent la ligne dans une mesure importante que lorsque le poste de commande central 1 les à adressés. Cet adressage peut être effectué périodiquement suivant un programme déterminé exécuté dans le poste de commande, les adresses des postes éloignés 3A à 3N étant émises successivement selon un cycle prédéterminé, qui est lui-même répété périodiquement. A titre d'exemple, le poste de commande central 1 peut adresser un poste éloigné et en recevoir un toutes les milli-secondes. Bien entendu, la valeur du courant permanent dépend du nombre de postes éloignés branchés sur la ligne, ce nombre pouvant varier dans des mesures assez larges, un nombre de 100 postes étant une valeur pratique.

La ligne 2 est de préférence torsadée et blindée pour permettre une bonne immunité aux bruits. Comme on le verra par la suite, chaque poste éloigné se comporte pour la ligne comme une résistance shunt qui en absorbant une partie de la puissance parasite transmise sur la ligne, augmente encore l'immunité aux bruits.

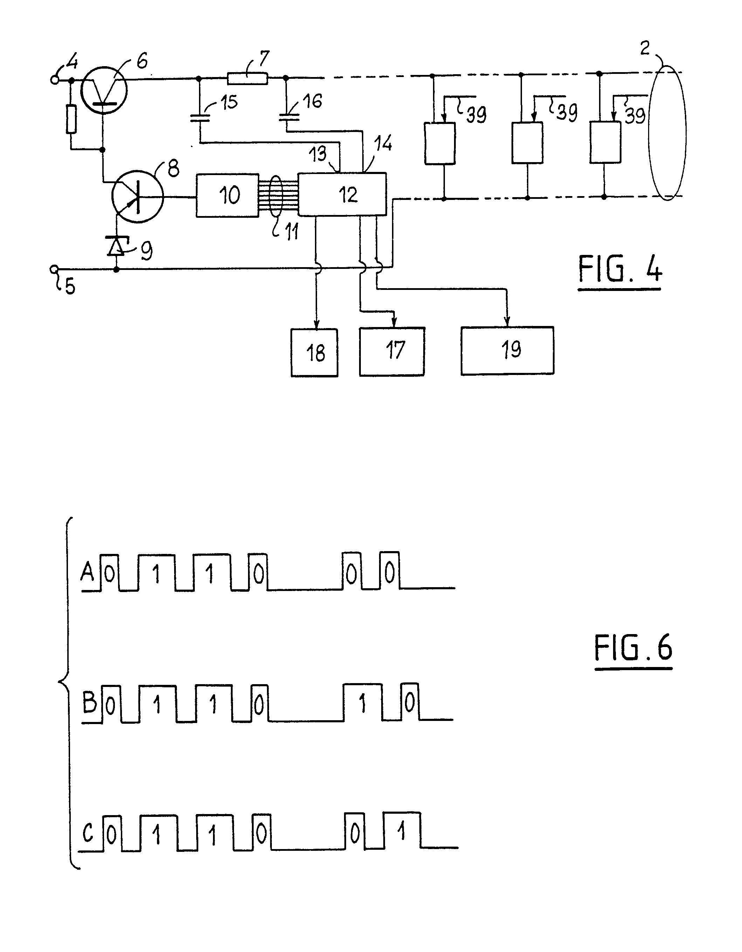

La Fig. 4 représente un schéma de principe du poste de commande et de surveillance 1. Ce poste comporte deux bornes d'alimentation 4 et 5. La borne 4 est reliée à l'un des conducteurs de la ligne 2 par 1 intermédiaire du trajet collecteur-émetteur d'un transistor de puissance 6 destiné à assurer la modulation de la tension sur la ligne 2. Une résistance série 7 est connectée entre ce transistor et la ligne 2 pour permettre la mesure des variations du courant circulant dans celle-ci. Le transistor 6 est commandé par un transistor de pilotage 8 dont la polarisation d'émetteur est fixée par une diode zener 9 reliée à la borne 5 et l'autre conducteur de la ligne 2. La base du transistor de pilotage 8 est raccordée à la sortie d'un circuit de conversion parallèle-série 10 qui par un bus 11 est relié à la sortie d'un circuit de commande et de traitement 12 constitué de préférence par un micro-processeur convenablement programmé.

Le circuit de commande comprend deux entrées 13 et 14 qui par des condensateurs 15 et 16 sont respectivement reliés aux deux extrémités de la résistance série 7 pour transférer les niveaux d antensité de la ligne 2 vers le micro-processeur 12. Celui-ci est en liaison avec une console de visualisation 17, une imprimante 18 et éventuellement un tableau de synoptique 19 représentant par des signaux lumineux par exemple, l'implantation des postes éloignés 3A à 3N sur une représentation topographique du bâtiment de manière à pouvoir être facilement interprétée par le personnel de surveillance.

La Fig. 5 représente le schéma simplifié de l'un des postes éloignés 3A à 3N. La ligne 2 est raccordée aux bornes 3a et 3b qui sont connectées à deux conducteurs 20 et 21 entre lesquels est branché l'ensemble du montage du poste éloigné. La borne 3a est raccordée par une diode 22 à la ligne 20 et celle-ci est raccordée par une autre diode 23 et une résistance 24 en série à un circuit d'alimentation 25 qui élabore sur une borne 26 la tension d'alimentation nécessaire aux circuits du poste éloigné. Le circuit 25 peut comporter un stabilisateur de tension et d'autres circuits connus assurant la fourniture d'une tension d'alimentation stable aux circuits d'utilisation du poste.

Le conducteur 20 est raccordé par une résistance 27 et un condensateur 28 à un oscillateur d'horloge 29 qui produit un signal d'horloge à 32 kHz par exemple sur une borne de sortie 30, son alimentation étant assurée par la tension moyenne d'entrée qui lui parvient par l'intermédiaire du poste de commande 1 et qui est synchronisée sur les fronts d'onde des signaux d'entrée, ceux-ci étant émis par le poste central 1 à une fréquence moyenne de 1000 Hz par exemple.

L'oscillateur 29 commande un registre à décalage 31 destiné à emmagasiner l'adresse du poste éloigné à la réception de celle-ci du poste central. Ce registre à décalage à ses sorties 32 connectées aux premières entrées d'un comparateur 33 qui reçoit sur ces autres entrées la sortie 34 d'un générateur de code interne 35. Ce générateur dont la configuration est établie une fois pour toute lors de l'installation du poste éloigné considéré, garde en mémoire l'adresse de celui-ci qui est donc comparée dans le comparateur 33 à l'adresse emmagasinée dans le registre à décalage 31. Les sorties du comparateur 33 sont appliquées à une porte NI 36 qui ne fournit un signal que lorsque l'adresse emmagasinée dans le registre 31 correspond à celle gardée en mémoire par le générateur 35 de code interne. La sortie de cette porte 36 est également raccordée à un registre d'exploitation 37 qui reçoit le signal d'horloge de l'oscillateur 29 par l'intermédiaire d'une borne 38 et qui est connecté à un certain nombre d'entrées d'exploration 39 numérotés de S1 à S5. Ce registre 37 qui est en fait un registre à décalage transfère les informations qui lui sont appliquées vers sa sortie 40 par l'intermédiaire d'un signal de commande qui lui parvient sur une borne 41 à partir du registre à décalage 31. Ainsi, le registre 37 est capable non seulement de fournir sur sa borne de sortie 40 l'adresse reconnue par la comparateur 33 mais également l'état des bornes S1 à S5 en décalant successivement les impulsions correspondantes vars sa sortie sous la commande de l'horloge 38.

La sortie 40 du registre à décalage 37 est connectée à une bascule 42 qui est synchronisée sur le signal d'horloge et dont la sortie est connectée à l'une das entrées d'une porte ET 43. La seconde entrée de cette porte 43 est connectée à la sortie d'une autre porte ET 44 qui ne valide la porte ET 43 qu'à la réception simultanée de trois signaux de validation dont l'un est le signal d'horloge, dont le second est le signal fourni par la porte NI 36 et qui représente donc la reconnaissance de l'adresse du poste éloigné considéré et dont le troisième est un signal de synchronisation qui lui est appliqué par l'intermédiaire d'un inverseur 45 raccordé au condensateur 28. Ce dernier signal est donc synchrone avec les impulsions provenant au poste éloigné par l'intermédiaire du poste central 1.

La porte 43 est également validée sur le signal d'horloge qui lui parvient à partir de l'oscillateur 29.

Les sorties des portes 43 et 44 sont respectivement appliquées en tant que signaux de commande à un circuit de puissance 46 qui est destiné à commander un transistor de sortie 47 dont la base est raccordée au circuit considéré d'une part directement pour recevoir des signaux binaires de valeur 1 et d'autre part indirectement par l'intermédiaire d'une résistance 47 à travers laquelle cette base reçoit un signal binaire de valeur 0. Les signaux 1 et 0 sont engendrés sélectivement lorsque la porte 43 ou la porte 44 transfère un signal de sortie au circuit de puissance 46.

Le circuit émetteur-collecteur du transistor 47 est relié entre les bornes 3a et 3b et modifie donc l'impédance entre ces deux conducteurs en fonction de l'état de commande de sa base.

En d'autres termes lorsque le transistor 47 est commandé, le courant dans la ligne 2 résultant de la tension qui lui est appliquée par le poste central est modifié au rythme de la commande de cette base conformément à la forme d'onde qui est représentée à la Fig. 3.

Les bornes 39 peuvent être raccordées à des dispositifs extérieurs aux postes éloignés. Il peut s'agir par exemple d'un détecteur d'incendie, d'un thermomètre ou autre dispositif de détection dont l'état rend compte de la situation sur place. Le poste éloigné comporte également une borne de sortie 47 qui conformément à un signal binaire pouvant faire partie du message envoyé en même temps par le poste central avec l'adresse du poste éloigné considéré, peut déclencher une action extérieure (par exemple l'ouverture d'une trappe, la commande d'une vanne ou autre action analogue) sur le lieu ou dans le local où est implanté le poste considéré.

Le fonctionnement de l'ensemble de l'installation ainsi agencé est le suivant:

Sur la Fig. 6, on suppose qu'un poste éloigné à l'adresse 0110 et qu'à l'instant considéré cette adresse est envoyée sous forme d'une tension modulée par le poste central dans la ligne 2. L'adresse étant reconnue dans le poste éloigné par le comparateur 33, celui-ci autorise le registre 37 à transférer des informations moyennant quoi, l'état des bornes 39 est pris en compte. Dans l'exemple de la Fig. 6, on suppose que le poste éloigné considéré ne comporte que deux bornes 39. Le graphique A de la Fig. 6 montre que le poste éloigné commande aon transistor 47 de manière que tout d'abord son adresse soit renvoyée dans la ligne 2 puis l'état des bornes 39 (S1 et S2, par exemple). Dans le cas représenté à ce graphique A, ces bornes ne sont pas excitées. Dans ces conditions, le registre ne reçoit que des signaux binaires 0 ce qui est interprété convenablement par le poste central 1. Dans le cas du graphique B, on suppose que la borne S1 est excitée par exemple en raison du fait qu'un détecteur d'incendie à constaté une augmentation excessive de la température dans le local ou le poste éloigné est implanté. Dans ces conditions, le poste éloigné émet tout d'abord son adresse, puis un signal binaire constitué par une impulsion haute (signal 1) puis une impulsion basse (signal 0). Le graphique C montre le cas inverse ou c'est le borne S2 qui à été excitée.

Comme on l'a déja indiqué ci-dessus, la surveillance de l'ensemble des postes éloignés peut être réaliaée par une exploiration systématique des postes, le microprocesseur 12 du poste central 1 envoyant une suite d'adresses dans la ligne et les postes éloignés renvoyant tous un message vers le poste central à la réception de leur adresse. Dans le cas représenté, l'adresse est constituée par quatre bits mais ce nombre n'est évidemment pas limitatif, un nombre de huit impulsions étant préférable ce qui permet d'utiliser au maximum 256 adresses. Lorsqu'un poste éloigné envoie le message de retour, le courant modulé est interprété en étant détecté par la résistance 7 grâce au microprocesseur 12 qui peut transformer le message ainsi reçu pour l'affichage ou une autre interprétation exécutée par les dispositifs 17 à 19 représentés sur la Fig. 4. Par exemple, le microprocesseur peut vérifier d'abord l'adresse et ensuite effectuer un traitement approprié à l'aide de son programme. Si l'adresse est bonne, rien ne se passe et si l'adresse est mauvaise, le défaut est indiqué sur la console de visualisation avec l'heure, la date, le numéro du poste éloigné en défaut. Eventuellement, des informations supplémentaires relatives à l'état des bornes 39 du poste éloigné en dérangement peuvent apparaître en language clair sur le dispositif de visualisation. Le synoptique 19 peut rendre également compte de cette situation par l'allumage d'un voyant lumineux par exemple.

Bien entendu, si une commande doit être exécutée au niveau d'un poste éloigné, l'adresse du poste est suivie d'une impulsion qui est traduite par la borne 47 du poste éloigné adressé.

La combinaison des adresses et des impulsions de commande tant à la réception qu'a l'émission permet par une programmation convenable d'effectuer des séquences complètes telles que lecture de l'alarme d'un détecteur d'incendie, puis la commande automatique ou manuelle par un clavier d'une extinction, d'une lecture d'un niveau de liquide, d'une fermeture de la lampe d'alimentation en cas de trop plein d'un réservoir ou d'une autre action analogue.

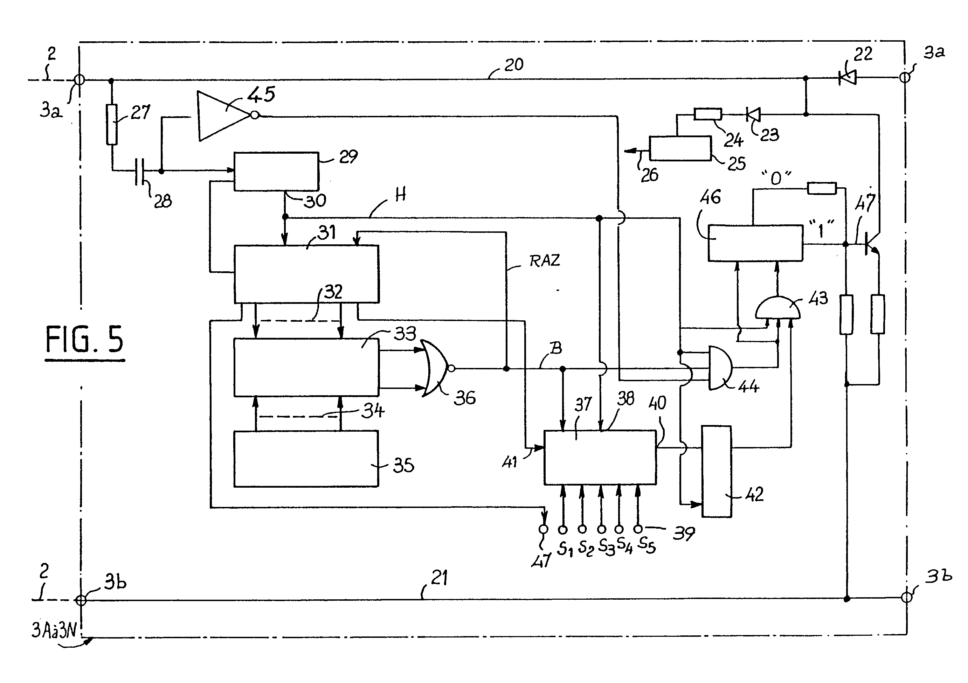

La Fig. 7 montre une variante de l'implantation des postes éloignés. La ligne 2 comporte ici des embranchements en parallèle 2a et 2b sur lesquels sont connectés divers postes éloignés. On voit donc que le montage particulier suivant l'invention confère au choix de l'implantation des postes éloignés une très grande souplesse moyennant l'utilisation de simples câbles téléphoniques blindés.

## Revendications

1. Procédé de transmission de messages par une liaison bifilaire entre un poste central (1) de commande et de surveillance et plusieurs postes de détection éloignés (3A à 3N) destinés à engendrer un signal représentatif d'au moins un paramètre de leur environnement, notamment pour la surveillance de locaux, au cours duquel le poste central (1) engendre successivement des adrasses affectées chacune à l'un des postes éloignés (3A à 3N), ceux-ci en réponse à la réception de cette adresse émettant un message caractéristique de la valeur du paramètre d'environnement correspondant, caractérisé en ce que lesdites adresses sont engendrées dans le poste central (1) par modulation d'un signal d'horloge ajouté à une tension continue appliquée en permanence à ladite liaison bifilaire, cette tension continue constituant également la tension d'alimentation des postes éloignés, et en ce que chaque poste éloigné (3A à 3N) transmet son message au poste central, par modulation entre deux niveaux au rythme du signal d'horloge, de l'amplitude du courant circulant dens ladite liaison, par applicetion à celle-ci de ladite tension, en modifiant l'immpédance de ladite ligne.

2. Procédé suivant la revendication 1, caractérisé en ce que ledit signal d'horloge est modulé en largeur d'impulsions.

3. Procédé suivant l'une quelconque des revendications 1 et 2, caractérisé en ce qu'il consiste à envoyer sélectivement des signaux de commande dans ladite ligne à la suite d'adresses destinées à au moins certains des postes éloignés (3A à 3N), et à déclencher dans le poste éloigné concerné et adressé, une action à la suite de la réception du signal de commande accompagnant l'adresse de ce poste.

4. Procédé suivant l'une quelconque des revendications 1 à 3, caractérisé en ce qu'il consiste à engendrer cycliquement les adresses de tous les postes éloignés, chaque cycle d'adressage consistant à adresser successivement tous les postes éloignés et à en recevoir un message.

5. Installation pour la mise en oeuvre du procédé tel que défini dans l'une quelconque des revendications précédentes, comprenant un poste central (1) de commande et de surveillance et plusieurs postes de détection éloignés (3A à 3N) répartis dans une unité telle qu'un bâtiment ou analogue à surveiller, reliés au poste central par une liaison bifilaire (2, 2a, 2b) et comprenant des moyens (6, 8, 9, 10, 11, 12) destinés à engendrer successivement des adresses affectées chacune à l'un des postes éloignés (3A à 3N), chacun de ceux-ci comprenant des moyens (43, 44, 46, 47) destinés à émettre un message caractéristique de la veleur du paremètre d'environnement correspondant, en réponse à la réception de cette adresse, caractérisée en ce que les moyens (6, 8, 9, 10, 11, 12) destinés à engendrer successivement les adresses des postes éloignés sont constitués par des moyens de modulation d'un signal d'horloge ajouté à une tension continue appliquée en permanence à la liaison bifilaire, cette tension constituant également la tension d'alimentation des postes éloignés, et en ce que les moyens (43, 44, 46, 47) destinés à émettre le message caractéristique du paramètre d'environnement des postes éloignés sont constitués per des moyens de modulation entre deux niveaux, au rythme du signal d'horloge, de l'amplitude du courant circulant dans la liaison, par application à celle-ci de ladite tension en modification l'impédance de ladite ligne.

6. Installation suivant la revendication 5, caractérisée en ce que ledit poste central (1) comprend un composant semi-conducteur commandé (6) branché en série avec un conducteur de ladite ligne bifilaire (2) sur une source de tension (4, 5) et en ce que ledit composant semi-conducteur est branché sur un circuit de commande permettant d'en faire varier la conduction pour moduler la tension continue appliquée à ladite ligne bifilaire (2) en vue de la génération des signaux d'horloge ou des signaux d'adresse modulés à partir de ceux-ci.

7. Installation suivant la revendication 6, caractérisée en ce que ledit circuit de commande comporte un microprocesseur (12) programmé pour élaborer des cycles d'adressage au cours desquels des adresses en code binaire sont engendrées, adresses avec lesquelles la conduction dudit composant semi-conducteur est commandée pour la modulation de ladite tension.

8. Installation suivant l'une quelconque des revendications 5 à 7, caractérisée en ce que lesdits moyens (43, 44, 46, 47) branchés en shunt sur la ligne bifilaire (2) dans chaque poste éloigné comprennent un composant semi-conducteur commandé (47) dont le trajet de conduction principal est raccordé entre les conducteurs de ladite ligne (2), trajet dont la conduction est modifiée en fonction des signaux de détection engendrés dans le poste éloigné.

9. Installation suivant la revendication 8, caractérisée en ce que chaque poste éloigné (3A à 3N) est pourvu d'un circuit de comparaison (33) dont un premier jeu d'entrées (32) est raccordé à une mémoire volatile (29) destinée à emmagasiner chaque adresse qui est envoyée par le poste central (1), dont un second jeu d'entrées est raccordé é une mémoire morte (35) qui conserve en mémoire le code binaire caractéristique du poste éloigné concerné, et dont la sortie est raccordée audit circuit de commande (43, 44, 46) pour la valider lorsque l'adresse reçue correspond au code binaire emmagasiné dans ladite mémoire morte (35).

10. Installation suivant la revendication 9, caractérisée en ce qu'il est prévu dans chaque poste éloigné, une seconde mémoire volatile (37) destinée à emmagasiner l'état binaire d'au moins une entrée (S1 à S5) sur laquelle peut apparaître un signal représentant la situation locale et en ce que la sortie de cette mémoire (37) est raccordée audit circuit de commande (43, 44, 46) pour lui transmettre son contenu, lorsque ce dernier reçoit ledit signal de validation.

11. Installation suivant les revendications 9 et 10 prises ensemble, caractérisée en ce que lesdites mémoires volatiles (31, 37) sont des registres à décalage connectées en série audit circuit de commande et à un oscillateur d'horloge interne (29) synchronisé sur les signaux d'horloge de la ligne et dont le signal de sortie est desiné à faire progresser leur contenu vers ledit circuit de commande.

**Patentansprüche**

1. Verfahren zum Übertragen von Meldungen über eine zweiadrige Leitung zwischen einem Steuer- und Überwachungsposten (1) und mehreren entfernt gelegenen Erfassungsposten (3A bis 3N), die dazu bestimmt sind ein Signal zu erzeugen, daß mindestens einem Parameter ihrer Umgebung entspricht, insbesondere zur Überwachung von Räumlichkeiten, wobei während des Verfahrens der zentrale Posten (1) nacheinander zu jedem der entfernten Posten (3A bis 3N) gehörende Adressen erzeugt, wobei die Posten als Antwort auf den Empfang dieser Adressen eine Meldung abgeben, die den entsprechenden Wert des Umgebungsparameters wiedergibt, dadurch gekennzeichnet, daß die Adressen in dem zentralen Posten (1) durch Modulation eines Taktsignals erzeugt werden, das zu einer Gleichspannung hinzugefügt wird, die permanent an der zweiadrigen Verbindung anliegt, wobei diese Gleichspannung ebenfalls die Speisespannung der entfernt gelegenen Posten bildet und dadurch, daß jeder entfernt gelegene Posten (3A bis 3N) seine Meldung an den zentralen Posten mittels einer Modulation zwischen zwei Pegeln im Rhytmus des Taktsignals und mit der Amplitude des Stroms, der in dieser Verbindung fließt durch Anlegen dieser Spannung überträgt, in dem die Inpedanz dieser Verbindung modifiziert wird.

2. Verfahren nach Anspruch 1, dadurch gekennzeichnet, daß das Taktsignal hinsichtlich seiner Pulsbreite moduliert wird.

3. Verfahren nach einem der Ansprüche 1 und 2, dadurch gekennzeichnet, daß selektiv Steuersignale anschließend an Adressen, die mindestens bestimmte entfernt gelegene Posten (3A bis 3N) betreffen an eine Leitung angelegt werden und wobei in dem betreffenden und adressierten entfernt gelegenen Posten eine Aktion ausgelöst wird, infolge auf den Empfang des Steuersignals, das zusammen mit der Adresse dieses Postens emittiert wird.

4. Verfahren nach einem der Ansprüche 1 bis 3, dadurch gekennzeichnet, daß zyklisch die Adressen aller entfernt gelegenen Posten erzeugt werden, wobei jeder Adressierzyklus darin besteht nacheinander alle entfernt gelegenen Posten zu adressieren und deren Meldungen zu empfangen.

5. Anordnung zur Durchführung des Verfahrens nach einem der vorstehenden Ansprüche mit einem zentralen Steuer- und Überwachungsposten (1) und mehreren entfernt gelegenen Erfassungsposten (3A bis 3N), die in einer Einheit, wie z. B. einem zu überwachenden Gebäude oder ähnlichem verteilt sind und die über eine zweiadrige Verbindung (2, 2a, 2b) mit den zentralen Posten verbunden sind und Mittel (6, 8, 9, 10, 11, 12) aufweisen, die dazu bestimmt sind aufeinanderfolgend jedem der entfernt gelegenen Posten (3A bis 3N) zugeordnete Adressen zu erzeugen, wobei jeder entfernt gelegene Posten Mittel (43, 44, 46, 47) aufweist, die dazu bestimmt sind, eine Meldung abzugeben, die charakteristisch ist für den Wert des entsprechenden Umgebungsparameters, als Antwort auf den Empfang dieser Adresse, dadurch gekennzeichnet, daß die Mittel (6, 8, 9, 10, 11, 12), die dazu bestimmt sind aufeinanderfolgend die Adressen der entfernt gelegenen Posten zu erzeugen aus Vorrichtungen zum Modulieren eines Taktsignals bestehen, das einer Gleichspannung hinzugefügt wird, die permanent an die zweiadrige Verbindung angelegt ist, wobei diese Spannung ebenfalls die Speisespannung der entfernt gelegenen Posten bildet und dadurch, daß die Organe (43, 44, 46, 47), die dazu bestimmt sind für die Umgebungsparameter charakteristische Meldungen der entfernt gelegenen Posten zu geben aus Moduliervorrichtungen bestehen zur Modulation der Amplitude des Stroms, der in der Verbindung fließt, zwischen zwei Pegeln im Rhytmus des Taktsignals durch Anlegen der besagten Spannung an diese Verbindung, wodurch die Impedanz dieser Verbindung mofiziert wird.

6. Anlage nach Anspruch 5, dadurch gekennzeichnet, daß der zentrale Posten (1) eine Halbleiterkomponente (6) aufweist, die in Reihe mit der zweiadrigen Verbindung (2) an eine Spannungsquelle (4, 5) geschaltet ist und dadurch, daß die Halbleiterkomponente an eine Steuerschaltung angeschlossen, die dessen Leitungszustand variieren kann um die an die zweiadrige Verbindung (2) angelegte Gleichspannung hinsichtlich der Taktsignale oder der modulierten Adressensignale ausgehend von diesen zu modulieren.

7. Anlage nach Anspruch 6, dadurch gekennzeichnet, daß die Steuerschaltung einen Mikroprozessor (12) aufweist, der programmiert ist zur Ausarbeitung von Adressierzyklen während den die binär kodierten Adressen erzeugt werden, mit denen der Leitungszustand der Halbleiterkomponente zur Modulation der Spannung gesteuert wird.

8. Anlage nach einem der Ansprüche 5 bis 7, dadurch gekennzeichnet, daß die Organe (43, 44, 46, 47) als "shunt" zur zweiadrigen Verbindung in jedem entfernt gelegenen Posten geschaltet ist, wobei jeder Posten ein gesteuertes Halbleiterelement (47) aufweist, dessen Hauptleitungsweg zwischen den Leitern der Verbindung (2) geschaltet ist, wobei der Leitungszustand des Leitungswegs in Abhängigkeit von den Erfassungssignalen modifiziert wird, die in den entfernt gelegenen Posten erzeugt werden.

9. Anlage nach Anspruch 8, dadurch gekennzeichnet, daß jeder entfernt gelegene Posten (3A bis 3N) mit einer Vergleichsschaltung (33) versehen ist, dessen erste Eingangsgruppe (32) an einen flüchtigen Speicher (29) geschaltet ist, der dazu bestimmt ist, jede Adresse, die von den zentralen Posten (1) abgeschickt wird zu speichern und dessen zweite Eingangsgruppe an einen Festspeicher (35) angeschlossen ist, der den charakteristischen Binärcode des betreffenden entfernt gelegenen Postens speichert und dessen Ausgang ein die Steuerschaltung (43, 44, 46) geschaltet ist um dieses gültig zu machen, wenn die empfangende Adresse dem im Festspeicher (3) gespeicherten Binärcode entspricht.

10. Anlage nach Anspruch 9, dadurch gekennzeichnet, daß in jedem entfernt gelegenen Posten ein zweiter flüchtiger Speicher (37) vorgesehen ist, der dazu bestimmt ist, den binären Zustand mindestens eines Eingangs (S1 bis S5) zu speichern, an dem ein Signal anliegen kann, daß der lokalen Situation entspricht und dadurch, daß der Ausgang dieses Speichers (37) an die Steuerschaltung (43, 44, 46) angeschlossen ist, um diesen seinen Inhalt zu übertragen, wenn die Schaltung das Signal empfängt, das diesen gültig macht.

11. Anlage nach den Ansprüchen 9 und 10 in Kombination, dadurch gekennzeichnet, daß die beiden flüchtigen Speicher (31, 37) Schieberegister sind, die in Serie mit der Steuerschaltung und an einen internen Taktgeber (29), der mit dem Taktsignal der Verbindung synchronisiert ist und dessen Ausgangssignal dazu bestimmt ist, den Speicherinhalt zur Steuerschaltung hin zu bewegen.

**Claims**

1. A method of transmitting messages by a bifilar connection between a central control and surveillance station (1) and a number of remote detection stations (3A to 3N) adapted to produce a signal representing at least one parameter of their surroundings, more particularly for the surveillance of premises, wherein the central station (1) successively produces addresses each assigned to one of the remote stations(3A to 3N), the latter emitting on reception of such address a message characteristic of the value of the corresponding surrounding parameter, characterized in that the addesses are produced at the central station (1) by modulation of a clock signal added to a continuous voltage permanently applied to the bililar connection, such continuous voltage also forming the supply voltage of the remote stations, and each remote station (3A to 3N) transmits its message by modulation between two levels, at the cadence of the clock signal, of the amplitude of the current flowing in the connection by the application thereto of such voltage by modifying the impedance of such line.

2. A method according to claim 1, characterized in that the clock signal is pulse width modulated.

3. A method according to claims 1 or 2, characterized in that it consists in selectively sending control signals on such line following addresses destined for at least some of the remote stations (3A to 3N) and triggering at the particular remote station addressed an action following the reception of the control signal accompanying the address of such station.

4. A method according to any of claims 1 to 3, characterized in that it consists in cyclically producing the addresses of all the remote stations, each addressing cycle consisting in successively addressing all the remote stations and receiving a message therefrom.

5. An apparatus for putting into effect the method as defined in any of the preceding claims, comprising a central control and surveillance station (1) and a number of distant detection stations (3A to 3N) which are distributed through a building or the like to be subjected to surveillance and are connected to the central station via a bifilar connection (2, 2a, 2b) and comprise means (6, 8, 9, 10, 11, 12) adapted to successively produce addresses each assigned to one of the remote stations (3A to 3N), each of the latter comprising means (43, 44, 46, 47) adapted to emit a message characteristic of the value of the corresponding surrounding parameter in reply to the reception of such address, characterized in that the means (6, 8, 9, 10, 11, 12) adapted to successively produce the addresses of the remote stations are formed by means for modulating a clock signal added to a continuous voltage permanently applied to the bifilar conection, such voltage also forming the supply voltage of the remote stations, and the means (43, 44, 46, 47) adapted to emit the message characteristic of the surrounding parameter of the remote stations are formed by means for the modulation between two values, at the cadence of the clock signal, of the amplitude of the current flowing in the connection by the application thereto of such voltage by modifying the impedance of such line.

6. An apparatus according to claim 5, characterized in that the central station (1) comprises a controlled semiconductor component (6) connected in series with a conductor of such bifilar line (2) to a voltage source (4, 5), and the semiconductor component is connected to a control circuit enabling its conduction to be varied to modulate the continuous voltage applied to such bifilar line (2) with a view to the generation of the clock signals or address signals modulated therefrom.

7. An apparatus according to claim 6, characterized in that the control circuit comprises a microprocessor (12) progammed to work out addressing cycles in which addresses in binary code are produced, the conduction of the semicondictor component being controlled with such addresses for the modulation of the voltage.

8. An apparatus according to any of claims 5 to 7, characterized in that the means (43, 44, 46, 47) shunt connected on the bifilar line (2) at each remote station comprise a controlled semiconductor component (47) whose main conduction path is connected between the conductors of such line (2), the conduction of the path being modified as a function of the detection signals produced at the remote station.

9. An apparatus according to claim 8, characterized in that each remote station (3A to 3N) has a comparison circuit (33) a first set of inputs of which (32) is connected to a a volatile memory (29) adapted to store each address sent by the central station (1), and a second set of inputs of which is connected to a read-only memory (36) which retains in store the binary code characteristic of the remote station concerned, and the output of which is connected to the control circuit (43, 44, 46) to enable the same when the address received corresponds to the binary code stored in the read-only memory (35).

10. An apparatus according to claim 9, characterized in that each remote station has a second volatile memory (37) adapted to store the binary state of at least one input (S1 to S5) on which a signal representing the local situation can appear, the output of such memory (37) being connected to such control circuit (43, 44, 46) to transmit its contents thereto when the enabling signal is received.

11. An apparatus according to claims 9 and 10 taken in conjunction, characterized in that the volatile memories (31, 37) are shift registers connected in series to the control circuit and to an internal clock oscillator (29) which is synchronized on the clock signals of the line and whose output signal is adapted to move their contents to the control circuit.

FIG.1

FIG.2

FIG.3

FIG.7

FIG. 4

FIG.6

FIG. 5